# EUROPÄISCHE PATENTANMELDUNG

(11) **EP 2 412 963 A1**
(43) Veröffentlichungstag der Anmeldung: **01.02.2012**
(21) Anmeldenummer: 11168743.0
(22) Anmeldetag: 06.06.2011
(51) Int. Cl.: F02M 37/00, F16L 55/04

(54) **Wellrohr einer Kraftstoffleitung**

(30) Priorität: 26.07.2010 DE 102010032220
(71) Anmelder: Continental Automotive GmbH, 30165 Hannover (DE)
(72) Erfinder: Hagist, Dieter, 56112 Lahnstein (DE); Nather, Helmut, 65520 Bad Camberg (DE)

(57) **Zusammenfassung**

Wellrohr einer Kraftstoffleitung

Gegenstand der Erfindung ist ein Wellrohr 1 einer Kraftstoffleitung einer Kraftstoffversorgungsanlage eines Kraftfahrzeuges mit zumindest einem biegsamen, Wellen aufweisenden Wellenabschnitt 3, wobei die Wellen aus jeweils einem Wellenberg 6 und einem Wellental 7 bestehen. Der zumindest eine Wellenabschnitt 3 besitzt einen Bereich 4, dessen Querschnitt eine von der Kreisform abweichende Form aufweist.

## Beschreibung

### Wellrohr einer Kraftstoffleitung

Die Erfindung betrifft ein Wellrohr einer Kraftstoffleitung einer Kraftstoffversorgungsanlage eines Kraftfahrzeuges mit zumindest einem biegsamen, Wellen aufweisenden Wellenabschnitt, wobei die Wellen aus jeweils einem Wellenberg und einem Wellental bestehen.

Solche Wellrohre werden bei heutigen Kraftstoffversorgungsanlagen heutiger Kraftfahrzeuge häufig zum Anschluss einer Kraftstoffpumpe mit einem Filter oder einem Flansch einer Kraftstoff-Fördereinheit eingesetzt und sind aus der Praxis bekannt. Bei der bekannten Kraftstoffversorgungsanlage wird das Wellrohr mit dem Endabschnitt auf einen meist ein Tannenbaumprofil aufweisenden Anschlussstutzen der Kraftstoffpumpe aufgeschoben. Das Endstück ist hierfür zylindrisch gestaltet. Der Wellenabschnitt ermöglicht die Flexibilität des Wellrohres, welches zum Ausgleich von Toleranzen der Kraftstoffversorgungsanlage dient. Darüber hinaus kommt es in Abhängigkeit vom Füllstand im Kraftstoffbehälter zu Relativbewegungen zwischen der Kraftstoffpumpe und dem Flansch, die von dem Wellrohr ausgeglichen werden.

Nachteilig bei dem bekannten Wellrohr ist, dass unerwünschte Druckpulsationen in der von der Kraftstoffpumpe zur Brennkraftmaschine des Kraftfahrzeugs führenden Vorlaufleitung auch durch das Wellrohr geleitet werden und dort Geräusche verursachen. Aufgrund seiner Lage im Kraftfahrzeug sind Geräusche im Kraftstoffbehälter grundsätzlich störend. Zudem sind Druckpulsationen grundsätzlich nachteilig, da sie je nach Größe und Dauer zu Schäden stromabwärts angeordneter Bauteile führen können.

Der Erfindung liegt das Problem zugrunde, ein Wellrohr der eingangs genannten Art so weiter zu bilden, dass es Druckpulsationen und dadurch erzeugten Geräuschen entgegenwirkt.

Dieses Problem wird erfindungsgemäß dadurch gelöst, dass der zumindest eine Wellenabschnitt zumindest einen Bereich besitzt, dessen Querschnitt eine von der Kreisform abweichende Form aufweist.

Aufgrund ihrer Querschnittsgeometrie können diese Bereiche bei Druckpulsationen ihren Querschnitt verändern. Diese Änderung trägt zur Dämpfung von Druckpulsationen und der dadurch entstehenden Geräusche bei.

Neben der Anordnung eines einzelnen Bereiches in einem Wellenabschnitt können auch mehrere Bereiche in einem Wellenabschnitt angeordnet werden. Hierdurch lässt sich die Dämpfung von Druckpulsationen weiter verstärken. Sofern das Wellrohr mehrere Wellenabschnitte aufweist, können ein oder mehrere Bereiche in einem, mehreren oder allen Wellenabschnitten angeordnet sein.

In einer vorteilhaften Ausgestaltung weist der Bereich einen ovalen Querschnitt auf. Je nach Ausbildung des ovalen Querschnitts lässt sich eine mehr oder minder starke Abweichung von der Kreisform erreichen. Der Grad der Abweichung ist ein Maß für die Verformbarkeit des jeweiligen Bereiches und damit für die Dämpfung der Druckpulsationen. Auf diese Weise lassen sich Wellrohre gezielt an die auftretenden Druckpulsationen anpassen.

Eine fertigungstechnisch besonders günstige Ausgestaltung des Wellrohres ist gegeben, wenn der Querschnitt des Bereiches von zwei Kreisbogenabschnitten gebildet ist, die sich einander gegenüberliegen und die beiden Kreisbogenabschnitte durch geradlinige Abschnitte miteinander verbunden sind. Insbesondere die geradlinigen Abschnitte lassen sich kostengünstig erzeugen. Darüber hinaus bieten gerade diese Abschnitte ein hohes Verformungspotential, was sich positiv auf die Dämpfung auswirkt.

Eine Dämpfung der Druckpulsationen bei ausreichender Stabilität der Bereiche wird mit einem Querschnitt erreicht, bei dem der Bereich von mindestens drei Kreisbogenabschnitten gebildet ist, wobei benachbarte Kreisbogenabschnitte durch geradlinige Abschnitte miteinander verbunden sind.

Eine besonders einfache Herstellung des erfindungsgemäßen Wellrohres wird erreicht, wenn die Querschnitte aller Bereiche in einem, mehreren oder allen Wellenabschnitten dieselbe Ausrichtung besitzen.

Der von der Kreisform abweichende Querschnitt führt dazu, dass das Wellrohr gegenüber herkömmlichen Wellrohren entlang seines Verlegeweges einen veränderten Bauraum beansprucht. In den Fällen, in denen der Bauraum in einer Richtung derart begrenzt ist, lässt sich das erfindungsgemäße Wellrohr dennoch einsetzen, wenn die Querschnitte der Bereiche eine unterschiedliche Ausrichtung besitzen. Diese Ausgestaltung erlaubt, die Ausrichtung der Querschnitte an den zur Verfügung stehenden Bauraum anzupassen. Bei einer Verlegung eines Wellrohres in einer horizontalen Ebene und einer Umlenkung um 180° innerhalb dieser Ebene würde ein Bereich mit einer Ausrichtung seines Querschnitts, bei dem die größte Erstreckung senkrecht zu der Ebene angeordnet ist, aufgrund des Biegeradius kaum noch zur Dämpfung beitragen. Das resultiert aus dem Umstand, dass die verformbaren Abschnitte bereits durch die Umlenkung des Wellrohres verformt sind und somit nur noch eine geringe Verformung bei Druckpulsationen durchführen können. Entsprechend gering ist die dann erzielte Dämpfung. Bei einer um 90° versetzten Ausrichtung der Bereiche sind die verformbaren Bereiche parallel zur horizontalen Ebene angeordnet. Die durch die Umlenkung hervorgerufene Verformung wird nun von der Längenänderung des Wellrohres aufgefangen und die verformbaren Bereiche stehen weiter für die Dämpfung von Druckpulsationen zur Verfügung. Das hat überdies den Vorteil, dass auch in solchen Abschnitten verformbare Bereiche angeordnet werden können. Da somit der Verlegeweg des Wellrohres besser nutzbar ist, kann das erfindungsgemäße Wellrohr kürzer gestaltet werden.

Die Übergänge zwischen kreisrunden Querschnitten und Querschnitten mit von der Kreisform abweichenden Querschnitten lassen sich fertigungstechnisch besonders einfach gestalten, wenn jeder Bereich an seinen beiden Enden jeweils einen Glattrohrabschnitt aufweist, wobei die Glattrohrabschnitte je ein Ende des Bereiches mit dem Wellenabschnitt oder einem angrenzenden Bereich verbinden. Zudem werden Druckpulsationen an diesen Übergängen in ihrer Ausbreitung gestört, was zu einer weiteren Dämpfung der Druckpulsationen und der damit verbundenen Geräuschen beiträgt.

Eine geringe Störung der Strömung durch die Übergänge wird erreicht, wenn die Glattrohrabschnitte derart gestaltet sind, dass ein kontinuierlicher Übergang zwischen den beiden Querschnitten erfolgt.

In einer einfachen Ausgestaltung ist der zumindest eine Bereich in Bezug auf die Länge des Wellrohres symmetrisch im Wellenabschnitt angeordnet. Infolge der symmetrischen Anordnung des Bereiches wird eine Beruhigung der Strömung nach jeder Querschnittsänderung erreicht. In Anpassung an den zur Verfügung stehenden Bauraum kann es vorteilhaft sein, wenn zumindest ein Bereich in Bezug auf die Länge des jeweiligen Wellenabschnitts asymmetrisch zu diesem angeordnet ist.

Die Strömung wird relativ gleichmäßig durch das Wellrohr geführt, wenn die Querschnittsfläche der Bereiche gleich der Querschnittsfläche des Wellenabschnitts ist, wobei die unterschiedlichen Querschnitte eines Wellentals und eines Wellenbergs hierbei vernachlässigt werden.

Die Erfindung lässt zahlreiche Ausführungsformen zu. Zur weiteren Verdeutlichung ihres Grundprinzips sind einige davon in der Zeichnung dargestellt und werden nachfolgend beschrieben. Diese zeigen in:
- Fig. 1: eine perspektivische Darstellung eines erfindungsgemäßen Wellrohres,
- Fig. 2: eine Schnittdarstellung des Wellrohres aus Figur 1,
- Fig. 3: einen Querschnitt des Wellrohrs aus Figur 2,
- Fig. 3a - c: verschiedene Querschnitte des Wellrohrs in schematischer Darstellung.
- Fig. 4a, b: das Wellrohr aus Figur 1 in unterschiedlichen Ausrichtungen und
- Fig. 5 - 7: weitere Ausführungen des erfindungsgemäßen Wellrohrs in schematischer Darstellung.

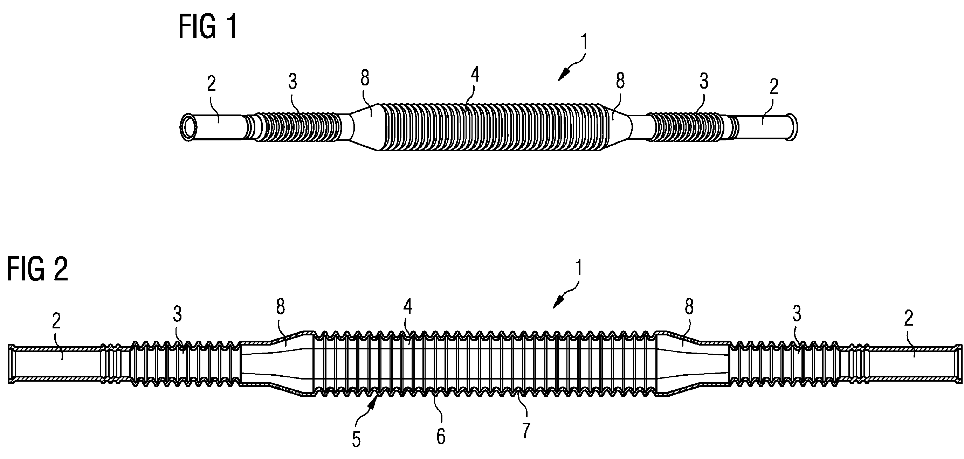

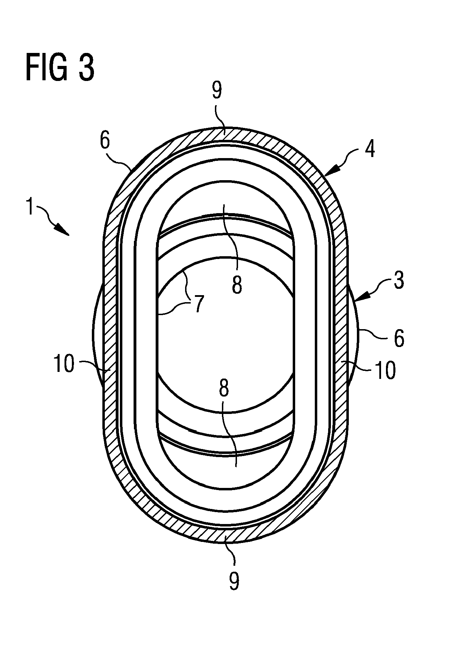

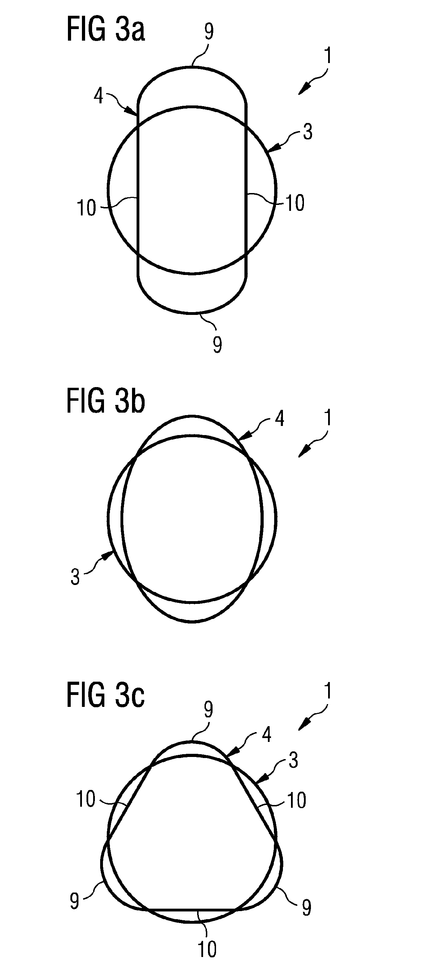

Figur 1 zeigt ein Wellrohr 1 wie es in einer nicht dargestellten Kraftstoff-Fördereinheit eines Kraftstoffbehälters für ein Kraftfahrzeug zum Einsatz kommt. Das Wellrohr ist dabei Teil der Vorlaufleitung, welche beispielsweise den Auslass einer Kraftstoffpumpe mit dem Motor des Kraftfahrzeugs verbindet. Das Wellrohr 1 besitzt als Glattrohr ausgebildete Endstücke 2, welche zur Montage benutzt werden. Das Wellrohr 1 weist einen Wellenabschnitt 3 auf, der sich zwischen den Endstücken 2 über den verbleibenden Verlauf des Wellrohres 1 erstreckt. Der Wellenabschnitt besitzt einen kreisförmigen Querschnitt. Symmetrisch im Wellenabschnitt 3 ist ein Bereich 4 angeordnet, dessen Querschnitt in Figur 3 dargestellt ist.

Wie in Figur 2 gezeigt, besitzen der Wellenabschnitt 3 und der Bereich 4 Wellen 5, die jeweils von einem Wellenberg 6 und einem Wellental 7 gebildet werden. Die Übergänge vom Wellenabschnitt 3 zum Bereich 4 werden von Glattrohrabschnitten 8 gebildet. Die Glattrohrabschnitte 8 besitzen in der Darstellung von Figur 2 aufgrund der unterschiedlichen Querschnitte des Wellenabschnitts 3 und des Bereiches 4 eine konische Form, wobei die Wandstärke konstant ist.

Der Bereich 4 besitzt einen von der Kreisform abweichenden Querschnitt, welcher in Figur 3 dargestellt ist. Dieser Querschnitt besteht aus zwei Kreisbogenabschnitten 9, die sich einander gegenüberliegen. Die beiden Kreisbogenabschnitte 9 sind durch geradlinige Abschnitte 10 miteinander verbunden. Bei auftretenden Druckpulsationen verformt sich der Querschnitt des Bereiches 4, indem er sich einer Kreisform annähert. Diese Verformung erfolgt in erster Linie in den geradlinigen Abschnitten 10. Diese Verformung des Bereiches 4 führt zu einer Dämpfung der Druckpulsationen.

Figur 3a zeigt das Wellrohr 1 nach Figur 3 in schematischer Darstellung. Das Wellrohr 1 in Figur 3b besitzt im Bereich 4 einen ovalen Querschnitt, wobei auch hier die vertikalen Abschnitte des ovalen Querschnitts den größten Anteil an der Verformung übernehmen. In Figur 3c besitzt der Bereich 4 einen polygonen Querschnitt in Form eines Dreiecks. Dieser Querschnitt besitzt drei Kreisbogenabschnitte 9, wobei benachbarte Kreisbogenabschnitte 9 über geradlinigen Abschnitten 10 miteinander verbunden sind. In allen Figuren 3a-c ist der kreisförmige Querschnitt des Wellenabschnitts 3 sichtbar. Der kreisförmige Querschnitt besitzt insbesondere in den Figuren 3a, b eine größere horizontale Erstreckung als der Querschnitt des Bereiches 4. Dagegen besitzt der Querschnitt des Bereiches 4 in vertikaler Richtung die größere Ausdehnung. Durch diese Ausgestaltungen wird erreicht, dass die Querschnittsfläche im gesamten Wellrohr 1 annähernd gleichbleibt, was sich positiv auf die Strömung auswirkt.

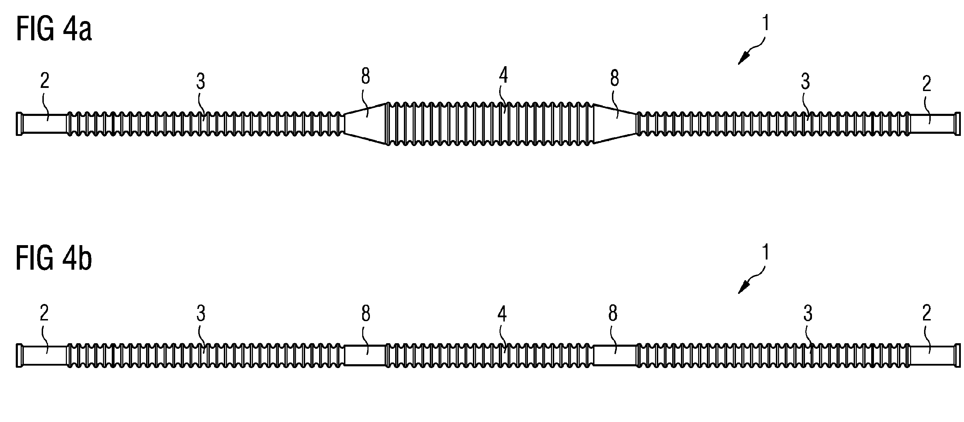

Die Figuren 4a, b zeigen das Wellrohr aus Figur 1, wobei der Bereich 4 in Figur 4b in seiner Ausrichtung um 90° versetzt gegenüber Figur 4a angeordnet ist.

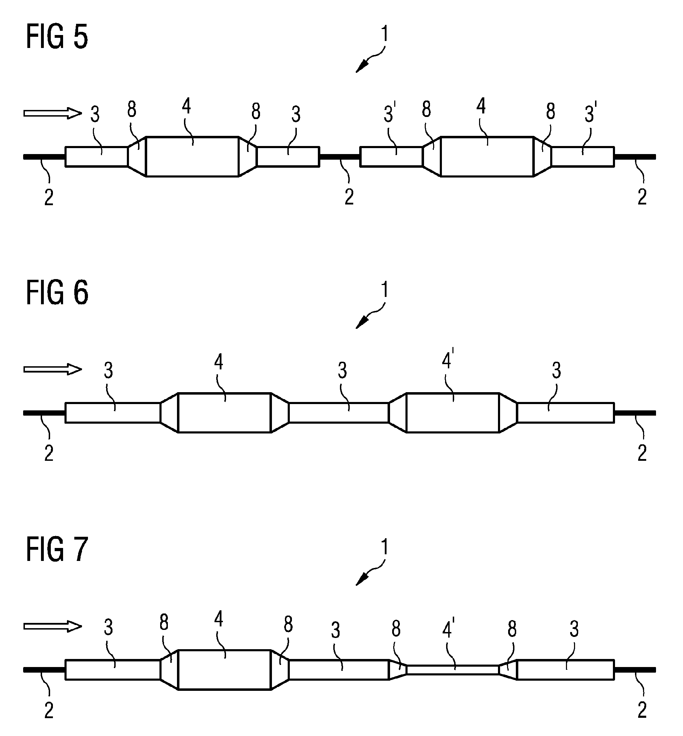

Figur 5 zeigt ein Wellrohr 1 mit zwei Wellenabschnitte 3, wobei in jedem Wellenabschnitt 3 je ein Bereich 4 angeordnet ist.

In der Figur 6 weist das Wellrohr 1 einen Wellenabschnitt 3 auf, in dessen Verlauf zwei Bereiche 4 angeordnet sind, wobei die Bereiche 4 dieselbe Ausrichtung aufweisen.

Im Gegensatz dazu zeigt Figur 7 ein Wellrohr mit zwei Bereichen 4, 4', deren Ausrichtung um 90° zueinander gedreht ist. Zur besseren Darstellung wurde in den Figuren 5-7 auf die Wiedergabe der Wellen verzichtet.

## Patentansprüche

1. Wellrohr einer Kraftstoffleitung einer Kraftstoffversorgungsanlage eines Kraftfahrzeuges mit zumindest einem biegsamen, Wellen aufweisenden Wellenabschnitt, wobei die Wellen aus jeweils einem Wellenberg und einem Wellental bestehen, **dadurch gekennzeichnet, dass** der zumindest eine Wellenabschnitt (3) zumindest einen Bereich (4) besitzt, dessen Querschnitt eine von der Kreisform abweichende Form aufweist.

2. Wellrohr nach Anspruch 1, **dadurch gekennzeichnet, dass** der Bereich (4) einen ovalen Querschnitt aufweist.

3. Wellrohr nach Anspruch 1, **dadurch gekennzeichnet, dass** der Querschnitt des Bereiches (4) von zwei Kreisbogenabschnitten (9) gebildet ist, die sich einander gegenüberliegen und dass die beiden Kreisbogenabschnitte (9) durch geradlinige Abschnitte (10) miteinander verbunden sind.

4. Wellrohr nach Anspruch 1, **dadurch gekennzeichnet, dass** der Querschnitt des Bereiches (4) von mindestens drei Kreisbogenabschnitten (9) gebildet ist und dass benachbarte Kreisbogenabschnitte (9) durch geradlinige Abschnitte (10) miteinander verbunden sind.

5. Wellrohr nach zumindest einem der vorhergehenden Ansprüche, **dadurch gekennzeichnet , dass** die Querschnitte aller Bereiche (4) in einem, mehreren oder allen Wellenabschnitten (3) dieselbe Ausrichtung besitzen.

6. Wellrohr nach zumindest einem der vorhergehenden Ansprüche 1 bis 5, **dadurch gekennzeichnet, dass** die Querschnitte der Bereiche (4, 4') eine unterschiedliche Ausrichtung besitzen.

7. Wellrohr nach zumindest einem der vorhergehenden Ansprüche, **dadurch gekennzeichnet, dass** jeder Bereich (4) an seinen beiden Enden jeweils einen Glattrohrabschnitt (8) aufweist, wobei die Glattrohrabschnitte (8) je ein Ende des Bereiches (4) mit dem Wellenabschnitt (3) oder einem angrenzenden Bereich (4) verbinden.

8. Wellrohr nach Anspruch 7, **dadurch gekennzeichnet, dass** die Glattrohrabschnitte (8) derart gestaltet sind, dass ein kontinuierlicher Übergang zwischen den angrenzenden Querschnitten erfolgt.

9. Wellrohr nach zumindest einem der vorhergehenden Ansprüche, **dadurch gekennzeichnet, dass** zumindest ein Bereich (4) in Bezug auf die Länge des jeweiligen Wellenabschnitts (3) asymmetrisch zu diesem angeordnet ist.

10. Wellrohr nach zumindest einem der vorhergehenden Ansprüche, **dadurch gekennzeichnet, dass** die Querschnittsfläche des zumindest einen Bereiches (4, 4') gleich der Querschnittsfläche des Wellenabschnitts (3) ist.
